# EUROPEAN PATENT SPECIFICATION

(11) **EP 4 119 810 B1**
(45) Date of publication and mention of the grant of the patent: **25.03.2026**
(21) Application number: 21768483.6
(22) Date of filing: 10.02.2021
(51) Int. Cl.: F16D 3/20, F16D 3/205, F16D 3/202, F16D 3/227

(54) **OUTER JOINT MEMBER FOR PLUNGING TYPE CONSTANT VELOCITY UNIVERSAL JOINT, PLUNGING TYPE CONSTANT VELOCITY UNIVERSAL JOINT, AND COMING-OFF PREVENTION PROCESSING METHOD**
ÄUSSERES GELENKELEMENT FÜR EIN TAUCHENDES GLEICHLAUFGELENK, TAUCHENDES GLEICHLAUFGELENK UND VERFAHREN ZUR VERARBEITUNG EINES AUSLAUFVERHINDERERS
ÉLÉMENT DE JOINT EXTERNE POUR JOINT UNIVERSEL HOMOCINÉTIQUE COULISSANT DE TYPE PLONGEANT, JOINT UNIVERSEL HOMOCINÉTIQUE COULISSANT DE TYPE PLONGEANT ET PROCÉDÉ DE TRAITEMENT DE PRÉVENTION DE DÉTACHEMENT

(30) Priority: 11.03.2020 JP 2020042272
(43) Date of publication of application: 18.01.2023
(73) Proprietor: NTN Corporation, Osaka-shi, Osaka 550-0003 (JP)
(72) Inventor: ITAGAKI, Taku, Iwata-shi Shizuoka 438-8510 (JP); KAWATA, Shota, Iwata-shi Shizuoka 438-8510 (JP); SUGIYAMA, Tatsuro, Iwata-shi Shizuoka 438-8510 (JP)
(74) Representative: Grünecker Patent- und Rechtsanwälte PartG mbB
(86) International application number: PCT/JP2021/005088
(87) International publication number: WO 2021/182002

(56) References cited:
- WO-A1-2011/078103
- WO-A1-2019/069922
- CN-A- 107 956 811
- JP-A- 2006 153 135
- JP-A- 2008 002 627
- JP-A- 2008 249 066
- JP-A- 2019 066 014

## Description

### Technical Field

The present invention relates to an outer joint member for a plunging type constant velocity universal joint, a plunging type constant velocity universal joint, and a coming-off prevention processing method.

### Background Art

In a power transmission system of an automobile or various industrial machines, there has been used a plunging type constant velocity universal joint that transmits rotational torque at constant velocity between two shafts, specifically, a driving shaft and a driven shaft while allowing not only angular displacement but also axial displacement.

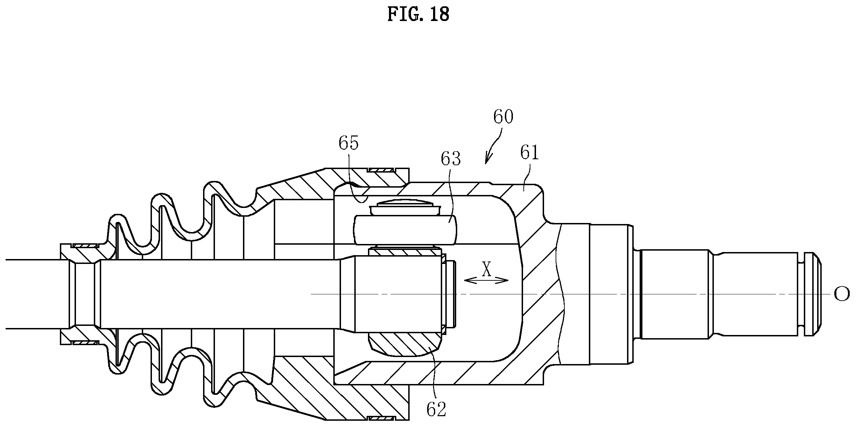

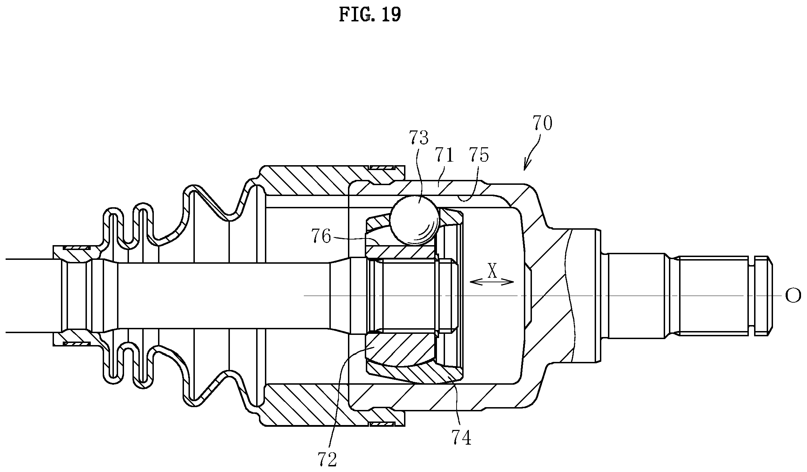

As the plunging type constant velocity universal joint, there have been known, for example, a tripod type constant velocity universal joint of a roller type as illustrated in FIG. 18 and a double-offset constant velocity universal joint of a ball type as illustrated in FIG. 19.

A tripod type constant velocity universal joint 60 illustrated in FIG. 18 includes an outer joint member 61 including a plurality of track grooves 65 in an inner peripheral surface thereof, a tripod member 62 serving as an inner joint member, and rollers 63 serving as rolling elements provided to the tripod member 62. In this constant velocity universal joint 60, the rollers 63 roll along the track grooves 65 of the outer joint member 61 so that internal components including the rollers 63 and the tripod member 62 move in an axial direction X with respect to the outer joint member 61. The term "axial direction" here means a direction of a center axis O of the outer joint member 61 or a direction of any axis parallel to the center axis O. The same applies hereinafter.

In contrast, a double-offset constant velocity universal joint 70 illustrated in FIG. 19 includes an outer joint member 71 including a plurality of track grooves 75 in an inner peripheral surface thereof, an inner joint member 72 including a plurality of track grooves 76 in an outer peripheral surface thereof, a plurality of balls 73 serving as rolling elements arranged between the track grooves 75 and 76 of the outer joint member 71 and the inner joint member 72 which are opposed to each other, and a cage 74 that retains the balls 73 while being interposed between the inner peripheral surface of the outer joint member 71 and the outer peripheral surface of the inner joint member 72. In this constant velocity universal joint 70, the balls 73 roll along the track grooves 75 of the outer joint member 71 so that internal components including the balls 73, the inner joint member 72, and the cage 74 move in the axial direction X with respect to the outer joint member 71.

Incidentally, in such a plunging type constant velocity universal joint, in order to prevent the internal components including the rollers, the balls, or the like from coming off from an opening end of the outer joint member at the time of mounting a joint to a vehicle body or the like, in Patent Literature 1 (JP 4609050 B2), a coming-off prevention structure for preventing the internal components from coming off is proposed. Specifically, pins are driven to an opening end surface of the outer joint member so that protruding portions are formed on inner surfaces of guide grooves, and rollers which are internal components are brought into abutment against the protruding portions, to thereby prevent the internal components from coming off.

An outer joint member according to the preamble of independent claim 1 is disclosed in Patent Literature 2. Further examples are disclosed in Patent Literature 3 and 4.

### Citation List

Patent Literature 1: JP 4609050 B2
Patent Literature 2: JP 2019 066014 A
Patent Literature 3: WO 2011/078103 A
Patent Literature 4: CN 107 956 811 A

### Summary of Invention

### Technical Problem

In the configuration in which the protruding portions are formed as described above, in order to allow the internal components to be assembled to the outer joint member even after the protruding portions are formed on the guide grooves of the outer joint member, the protruding amount of the protruding portions is set to such a degree that getting over (press fitting) of the rollers or the balls is allowed.

However, at the time of assembling the internal components to the outer joint member, when the rolling elements such as the rollers or the balls are strongly brought into contact with end surface edges of the protruding portions, there is a fear in that a contact mark is formed in the surface of the rolling element or a part of the outer joint member adheres to the surface of the rolling element.

In view of this, the present invention has an object to provide an outer joint member for a plunging type constant velocity universal joint, a plunging type constant velocity universal joint, and a coming-off prevention processing method capable of preventing coming off of internal components while suppressing occurrence of a contact mark or adhesion.

### Solution to Problem

In order to solve the above-mentioned problem, according to the present invention, there is provided an outer joint member for a plunging type constant velocity universal joint, the outer joint member comprising a track groove configured to receive a rolling element in an inner peripheral surface thereof, the outer joint member being configured to transmit rotational torque while allowing angular displacement and axial displacement between the outer joint member and an inner joint member through intermediation of the rolling element, the outer joint member comprising: a raised portion formed by caulking at an opening end side of the track groove so as to prevent coming-off of internal components comprising the rolling element and the inner joint member; a recess formed by caulking at an opening end surface corresponding to a portion at which the raised portion is formed; and an inlet inclined surface, which is inclined by 45° or more with respect to the opening end surface, and is formed at the opening end of the track groove adjacent to the raised portion, wherein the raised portion comprises a raised inclined surface inclined so as to increase a raised amount from the opening end side to a joint far side.

The outer joint member for a plunging type constant velocity universal joint according to the present invention has the structural feature as described above, thereby being capable of avoiding formation of an end surface edge having an acute angle on the raised portion. With this, when the internal components are to be assembled to the outer joint member, occurrence of a contact mark or adhesion to the rolling element due to contact with the end surface edge can be suppressed.

Further, in order to achieve the action and effect of the present invention described above, it is desired that the inlet inclined surface be inclined with respect to the opening end surface in a range of from 60° or more and 70° or less.

Further, it is preferred that the recess has a shape having a pair of inclined surfaces provided at positions apart from each other in a direction along the track groove and inclined so as to approach each other toward a bottom portion of the recess as viewed from an axial direction. The recess is formed into such shape having a pair of inclined surfaces. Thus, a shape of the processing tool for forming the recess can be formed in a shape having a pair of side surfaces inclined so as to approach each other toward a distal end. When the processing tool has such a shape, the distal end of the processing tool is easily pushed into the opening end surface of the outer joint member. With this, a load applied at the time of pushing the processing tool can be reduced, thereby being capable of improving durability of the processing tool.

Further, the raised portion may allow coming off of the internal components when a pull-out force larger than a coming-off force that may be generated at the time of an operation for assembling a joint is applied to the internal components. In this case, the outer joint member and the internal component can be separated away from each other after assembly, thereby improving operability of repair and maintenance.

There is provided a plunging type constant velocity universal joint, comprising: an outer joint member having a track groove formed in an inner peripheral surface thereof; a rolling element arranged in the track groove so as to be rollable; and an inner joint member configured to transmit rotational torque while allowing angular displacement and axial displacement between the inner joint member and the outer joint member through intermediation of the rolling element, wherein the plunging type constant velocity universal joint comprises, as the outer joint member, the outer joint member for a plunging type constant velocity universal joint according to the present invention. With this configuration, the above-mentioned action and effect can be obtained.

Further, in order to solve the above-mentioned problem, according to the present invention, there is provided a coming-off prevention processing method of performing coming-off prevention processing for internal components comprising a rolling element and an inner joint member on an outer joint member for a plunging type constant velocity universal joint, the outer joint member comprising a track groove configured to receive a rolling element in an inner peripheral surface thereof, the outer joint member being configured to transmit rotational torque while allowing angular displacement and axial displacement between the outer joint member and an inner joint member through intermediation of the rolling element. In the coming-off prevention processing method according to the present invention, the method comprises: forming an inlet inclined surface inclined by 45° or more with respect to the opening end surface of the outer joint member at an opening end of the track groove; and by forming a recess in the opening end surface by a caulking process, the opening end side of the track groove comprising at least the inlet inclined surface is raised to form a raised portion for preventing the internal component from coming off.

As described above, the inlet inclined surface inclined by 45° or more with respect to the opening end surface of the outer joint member is formed on the opening end of the track groove, thereby being capable of avoiding formation of an end surface edge having an acute angle on the raised portion formed thereafter. With this, when the internal component is to be assembled to the outer joint member, occurrence of a contact mark in the rolling element or adhesion to the rolling element can be suppressed.

### Advantageous Effects of Invention

According to the present invention, it is possible to prevent coming off of internal components while suppressing occurrence of a contact mark or adhesion.

### Brief Description of Drawings

FIG. 1 is a longitudinal sectional view of a tripod type constant velocity universal joint according to an embodiment of the present invention.
FIG. 2 is a transverse sectional view of the tripod type constant velocity universal joint illustrated in FIG. 1.
FIG. 3 is an end view of an outer joint member of the tripod type constant velocity universal joint illustrated in FIG. 1 as viewed from an opening end side.
FIG. 4 is a longitudinal sectional view of the outer joint member taken along an axial direction at positions of raised portions, and is a view for illustrating a state in which the roller is press-fitted into a track groove.
FIG. 5 is a longitudinal sectional view of the track groove before the raised portion is formed.
FIG. 6 is a longitudinal sectional view of the track groove in which an inlet inclined surface is formed at the opening end.
FIG. 7 is an end view of the outer joint member, for illustrating a range in which the inlet inclined surface is formed.
FIG. 8 is a view for illustrating an example of pressing a processing tool to form a raised inclined surface.
FIG. 9 is an enlarged view for illustrating a state in which the roller is press-fitted into the track groove.
FIG. 10 is an end view of the outer joint member in a state in which the raised portion is formed.
FIG. 11 is a perspective view for illustrating an example of the processing tool.
FIG. 12 is a perspective view for illustrating another example of the processing tool.
FIG. 13 is an end view of the outer joint member, for illustrating a recess and the raised portion formed using the processing tool illustrated in FIG. 12.
FIG. 14 is an end view of the outer joint member, for illustrating a modification example of the recess and the raised portion.
FIG. 15 is a view for illustrating an example in which an end surface edge having an acute angle is formed.
FIG. 16 is a view for illustrating an example of a case in which an inclination angle of the raised inclined surface is less than 45°.
FIG. 17 is a view for illustrating another example of pressing the processing tool to form the raised inclined surface.
FIG. 18 is a longitudinal sectional view of a related-art tripod type constant velocity universal joint.
FIG. 19 is a longitudinal sectional view of a related-art double-offset constant velocity universal joint.

### Description of Embodiments

Now, description is made of an embodiment of the present invention with reference to the accompanying drawings.

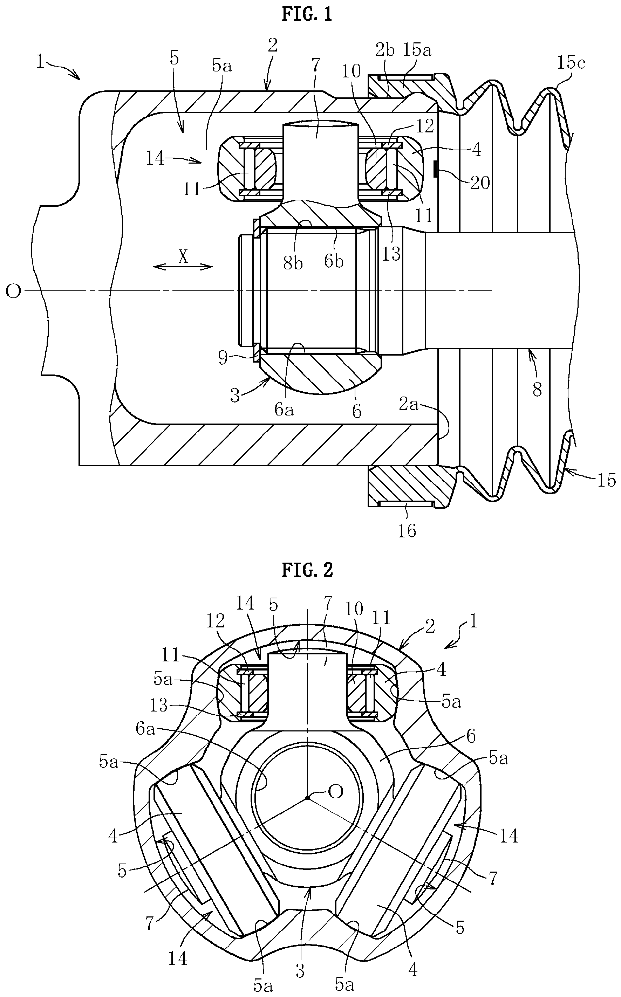

FIG. 1 is a longitudinal sectional view of a tripod type constant velocity universal joint according to an embodiment of the present invention, and FIG. 2 is a transverse sectional view of the tripod type constant velocity universal joint according to this embodiment.

As illustrated in FIG. 1 and FIG. 2, a tripod type constant velocity universal joint 1 according to this embodiment comprises, as main components, an outer joint member 2, a tripod member 3 serving as an inner joint member, and rollers 4 serving as rolling elements.

The outer joint member 2 is a member formed in a cup shape having an opening portion at one end. In an inner peripheral surface of the outer joint member 2, three track grooves 5 extending in an axial direction are formed at equal intervals in a circumferential direction. Each of the track grooves 5 has roller guide surfaces 5a serving as rolling element guide surfaces opposed to each other. The term "axial direction" in the description related to the present invention means a center axis O of the outer joint member 2 or a direction X of any axis parallel to the center axis O (see FIG. 1).

The tripod member 3 comprises a boss portion 6 having a center hole 6a, and three leg shafts 7 protruding from the boss portion 6 in a radial direction. The center hole 6a of the boss portion 6 has a female spline 6b fittable to a male spline 8b formed in an end portion of a shaft 8. The end portion of the shaft 8 is inserted into the center hole 6a so that the male spline 8b and the female spline 6b are fitted to each other, thereby coupling the shaft 8 and the tripod member 3 to each other so as to be integrally rotatable. Further, a snap ring 9 is mounted to the end portion of the shaft 8 which protrudes from the center hole 6a, thereby preventing coming off of the shaft 8 from the tripod member 3 in the axial direction.

A roller unit 14 comprising the roller 4 and the like is mounted to each of the leg shafts 7 of the tripod member 3. The roller unit 14 comprises the roller 4 serving as an outer ring, an inner ring 10 arranged on an inner side of the roller 4 and externally fitted to the leg shaft 7, and a large number of needle rollers 11 interposed between the roller 4 and the inner ring 10. The roller 4, the inner ring 10, and the needle rollers 11 are assembled to each other with washers 12 and 13 so as not to be separated away from each other.

Further, the rollers 4 are arranged in the track grooves 5 of the outer joint member 2. The rollers 4 roll along the roller guide surfaces 5a of the track grooves 5 so that internal components comprising the roller units 14 and the tripod member 3 are displaced in the axial direction with respect to the outer joint member 2. Further, the transverse cross section of the leg shaft 7 is formed in a substantially elliptical shape so that the roller unit 14 can be inclined with respect to the axis of the leg shaft 7. With this, angular displacement in which the axis of the tripod member 3 is inclined with respect to the axis of the outer joint member 2 is allowed. Further, the roller unit 14 also functions as a torque transmission member that transmits rotational torque between the tripod member 3 and the outer joint member 2 when the tripod member 3 rotates along with rotation of the shaft 8.

Further, the tripod type constant velocity universal joint 1 according to this embodiment comprises a boot 15 for sealing the opening portion of the outer joint member 2. The boot 15 comprises a large-diameter end portion 15a, a small-diameter end portion (not shown), and a bellows portion 15c coupling the large-diameter end portion 15a and the small-diameter end portion to each other. The large-diameter end portion 15a is mounted to a boot mounting portion 2b formed on an opening end side of a radially outer surface of the outer joint member 2 by being fastened with a boot band 16. Further, the small-diameter portion is mounted to a boot mounting portion (not shown) formed in a radially outer surface of the shaft 8 by being fastened with another boot band.

In the following, a coming-off prevention structure for preventing coming off of the internal components (the roller unit 14 and the tripod member 3) from the outer joint member 2 is described.

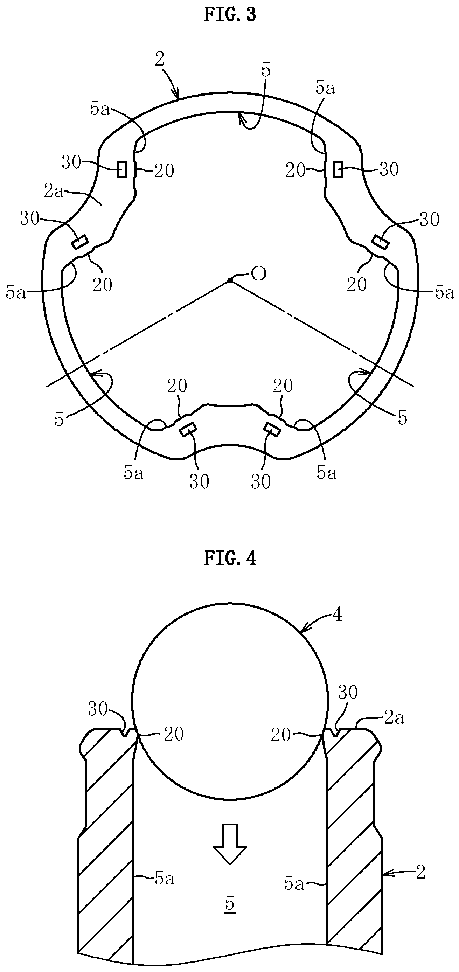

FIG. 3 is an end view of the outer joint member 2 as viewed from the opening end side.

As illustrated in FIG. 3, on the opening end side of the track groove 5 of the outer joint member 2, raised portions 20 for preventing coming off of the internal components are formed. In this embodiment, the raised portion 20 is provided one by one on each roller guide surface 5a of each track groove 5. Further, in an opening end surface 2a of the outer joint member 2 corresponding to a portion at which each raised portion 20 is formed, there is formed a recess 30 which is a tool mark given when the outer joint member 2 is caulked so as to form the raised portion 20. The recess 30 is formed in a rectangle (rectangular shape or square shape) as viewed from the axial direction, and is formed one by one so as to correspond to each raised portion 20 at an independent position (opening end surface 2a) which is not continuous with the track groove 5. It is not always required that the protruding amounts of the respective raised portions 20 be the same. The protruding amounts of the raised portions 20 may be made different for each outer joint member 2, each track groove 5, or each raised portion 20.

FIG. 4 is a longitudinal sectional view of the outer joint member 2 taken along the axial direction at positions of the raised portions 20.

As illustrated in FIG. 4, the raised portion 20 protrudes inward from the roller guide surface 5a. When the internal components are to be assembled to the outer joint member 2, the roller 4 which is the internal component is pushed from the opening end 2a side of the track groove 5 to the joint far side (lower side of FIG. 4). At this time, the roller 4 comes into contact with the raised portions 20 to restrict insertion of the roller 4 temporarily. However, the roller 4 is pushed into the track groove 5 against a restricting force of the raised portions 20, and the roller guide surfaces 5a opposed to each other are elasto-plastically deformed and expanded so that the roller 4 can get over the raised portions 20. With this, the roller 4 is inserted into the far side of the track groove 5, and the internal component is assembled. After the internal component is assembled in this manner, movement of the roller 4 from the track groove 5 to an outside is restricted by the raised portions 20, thereby preventing coming off of the internal component.

The coming-off prevention force by the raised portions 20 is set to be equal to or larger than a coming-off force that may be generated at the time of an operation of assembling the joint to a vehicle body or the like. Thus, the internal component does not come off from the outer joint member 2 by the coming-off force that may be generated at the time of an operation of assembling the joint. Further, when a pull-out force larger than the coming-off force that may be generated at the time of an operation of assembling the joint is applied to the internal component, the raised portions 20 may allow the internal component to come off. Accordingly, the outer joint member and the internal component can be separated away from each other after assembling, thereby improving operability of repair and maintenance.

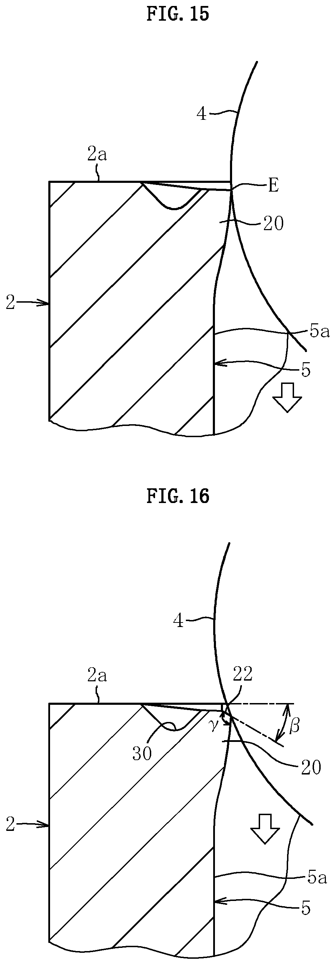

Incidentally, in a case in which an end surface edge E having an acute angle is present on the opening end side of the raised portion 20 as in the example illustrated in FIG. 15, when the internal component is to be assembled to the outer joint member, the roller 4 comes into contact with the end surface edge E, and hence there is a fear in that a contact mark is formed in the surface of the roller 4, or a part of the outer joint member adheres to the surface of the roller 4. Further, when the internal component is to be assembled to the outer joint member, the roller 4 comes into contact with the end surface edge E so that the roller 4 may be inclined. In this case, the direction in which the roller 4 rolls and the direction in which the internal component is assembled (insertion direction) are different from each other, and hence it becomes difficult to assemble the internal component. As described above, when the end surface edge E having an acute angle is present, there is a fear in that the surface of the roller is damaged, and ease of assembly is also degraded.

In contrast, in the embodiment of the present invention, in order to suppress occurrence of damage and inclination of the roller at the time of assembly, the raised portions are formed as described below. In the following, the coming-off prevention structure and a coming-off prevention processing method of the outer joint member according to this embodiment are described.

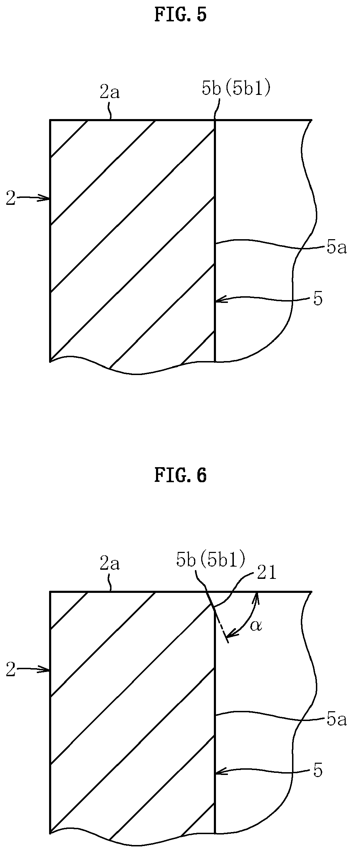

FIG. 5 is a longitudinal sectional view of the track groove 5 before the raised portion 20 is formed. As illustrated in FIG. 5, a corner portion having a substantially right angle formed by the opening end surface 2a of the outer joint member 2 and the track groove 5 is present at an opening end 5b of the track groove 5 (opening end 5b1 of the roller guide surface 5a) before the raised portion 20 is formed.

In this embodiment, first, the corner portion is subjected to cutting, for example, so that an inlet inclined surface 21 is formed at the opening end 5b as illustrated in FIG. 6. The inlet inclined surface 21 may be formed by forging. The inlet inclined surface 21 is inclined to the radially inner side of the joint from the opening end surface 2a side of the outer joint member 2 toward the joint far side, and an inclination angle α of the inlet inclined surface 21 with respect to the opening end surface 2a of the outer joint member 2 is 45° or more (and less than 90°).

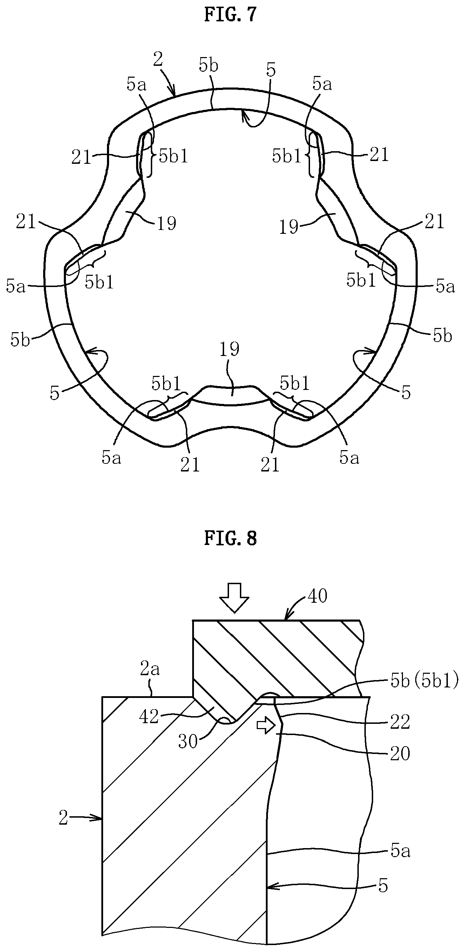

As illustrated in FIG. 7, it is only required that the inlet inclined surface 21 be formed at least at the opening end 5b1 of the roller guide surface 5a with which the above-mentioned roller 4 comes into contact in the track groove 5. Further, the inlet inclined surface 21 may be provided at the opening end 5b of the entire track groove 5. The inlet inclined surface 21 herein is different from an inclined surface for preventing an interference of a shaft, which is generally provided in an outer joint member for a tripod type constant velocity universal joint. The inclined surface for preventing an interference of a shaft is an inclined surface 19 (see FIG. 7) formed between the track grooves 5 such that the shaft 8 does not interfere with the opening end of the outer joint member 2 when the internal component (tripod member 3) forms an operating angle on the far side of the outer joint member 2. In contrast, the inlet inclined surface 21 is an inclined surface provided at the opening end 5b of the track groove 5 separately from the inclined surface 19 for preventing an interference of a shaft.

Next, as illustrated in FIG. 8, a processing tool 40 for caulking the raised portion is pressed against the opening end surface 2a of the outer joint member 2, and a raised portion forming portion 42 having a convex shape of the processing tool 40 is made to bite into the opening end surface 2a. At this time, a portion of the opening end surface 2a against which the processing tool 40 is pressed is a portion corresponding to a portion at which the inlet inclined surface 21 is formed. For example, the processing tool 40 is pressed at a position away by 0.1 mm to 0.8 mm from an edge at which the inlet inclined surface 21 is formed to the radially outer side of the joint. With this, the recess 30 which is a tool mark is formed in the opening end surface 2a, and a portion in the vicinity of the opening end 5b of the track groove 5 is plastically deformed so as to protrude to the radially inner side of the joint, thereby forming the raised portion 20.

In the raised portion 20 formed as described above, a raised inclined surface 22 inclined so as to increase the raised amount from the opening end 5b side of the track groove 5 toward the joint far side (lower side of FIG. 8) is formed. The raised inclined surface 22 is formed by raising the inlet inclined surface 21 formed in advance at the opening end 5b of the track groove 5 along with formation of the raised portion 20. The raised inclined surface 22 is formed on the raised portion 20 so that the end surface edge E having an acute angle as illustrated in FIG. 15 is not formed on the raised portion 20.

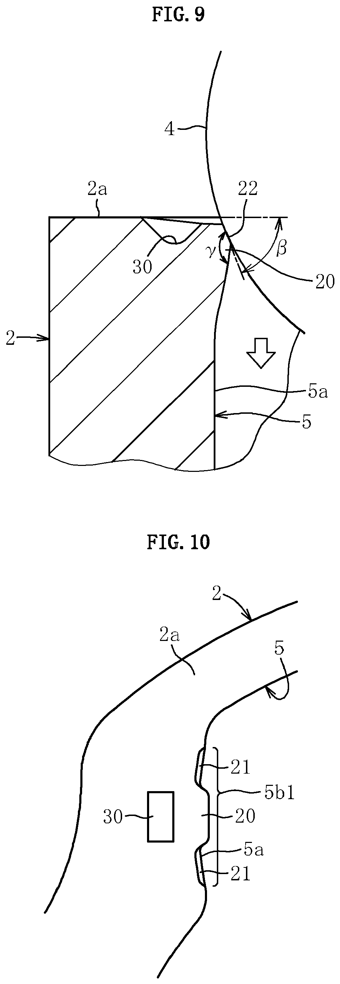

As described above, in this embodiment, the inlet inclined surface 21 is formed in advance at the opening end 5b of the track groove 5 before the formation of the raised portion 20, thereby being capable of avoiding formation of the end surface edge E having an acute angle at the raised portion 20. With this, occurrence of a contact mark or adhesion caused due to contact of the roller 4 with the end surface edge E can be avoided. That is, in the case of this embodiment, when the internal component is to be assembled to the outer joint member 2, as illustrated in FIG. 9, the roller 4 is press-fitted into the track groove 5 while being in contact with the raised inclined surface 22 of the raised portion 20, thereby being capable of preventing a large contact pressure from being applied to the roller 4. With this, occurrence of a contact mark in the surface of the roller 4 or adhesion of a part of the outer joint member to the surface of the roller 4 can be suppressed. Further, when the roller 4 is to get over the raised portion 20, the raised inclined surface 22 functions as a guide surface for guiding the roller 4. Thus, the roller 4 is less liable to be inclined, and it becomes easy to assemble the internal component. As described above, according to the configuration of this embodiment, ease of assembly can be improved while suppressing occurrence of a contact mark or adhesion.

Further, the inclination angle α of the inlet inclined surface 21 is set to 45° or more so that a larger inclination angle β (see FIG. 9) with respect to the opening end surface 2a of the outer joint member 2 of the raised inclined surface 22 can be secured. In contrast, when the inclination angle α of the inlet inclined surface 21 is less than 45°, as illustrated in FIG. 16, the inclination angle β of the raised inclined surface 22 also becomes smaller. In this case, the roller 4 is less likely to come into contact with the raised inclined surface 22, and thus making the raised inclined surface 22 difficult to exert the function as the guide surface for guiding the roller 4. Further, the inclination angle β of the raised inclined surface 22 becomes smaller so that an edge angle γ of the most protruding portion of the raised portion 20 is smaller than that in this embodiment (see FIG. 9). Thus, the contact pressure applied when the roller 4 comes into contact with the raised portion 20 increases. Accordingly, a contact mark is liable to be formed in the roller 4, or adhesion of the outer joint member to the roller 4 is liable to occur. In contrast, in the case of this embodiment, the large inclination angle β of the raised inclined surface 22 can be secured. Thus, the roller guide function at the time of assembling the internal component can sufficiently be exerted, and a contact mark or adhesion can effectively be suppressed. Further, in order to effectively exert such a function and an effect, it is desired that the inclination angle α of the inlet inclined surface 21 be set in a range of from 60° or more and 70° or less.

FIG. 10 is an end view of a portion at which the raised portion 20 is formed and a periphery thereof in the outer joint member 2 according to this embodiment as viewed from the opening end surface 2a side.

As illustrated in FIG. 10, under a state in which the raised portion 20 is formed on the track groove 5, a part of the inlet inclined surface 21 remains in a portion adjacent to the raised portion 20 in the opening end 5b1 of the roller guide surface 5a. This is because the inlet inclined surface 21 is formed in a range wider than a range of the raised portion 20 formed thereafter. As described above, the inlet inclined surface 21 is formed in the range wider than the range in which the raised portion 20 is formed so that the raised portion 20 can reliably be formed on the raised inclined surface 22, thereby being capable of achieving the above-described function or effect. The region in which the inlet inclined surface 21 remains may be on both sides of the raised portion 20 as illustrated in FIG. 10 or may be only one side of the raised portion 20.

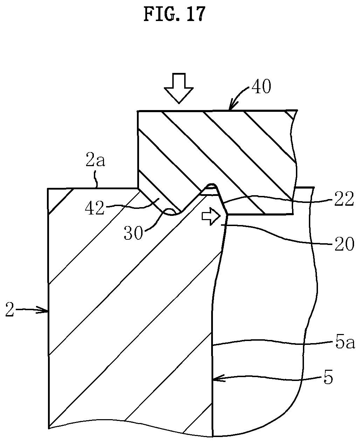

Further, as another method of forming the raised inclined surface 22 on the raised portion 20, for example, a method of forming the raised inclined surface 22 together with the raised portion 20 by pressing the processing tool 40 against the raised portion 20 in the middle of formation as in the example illustrated in FIG. 17 is also conceivable. In this case, the inlet inclined surface 21 is not formed in advance at the opening end 5b of the track groove 5, and a part of projection of the raised portion 20 is restrained by the processing tool 40 at the time of forming the raised portion 20 to form the raised inclined surface 22. However, in this method, while the processing tool 40 is pushed into the opening end surface 2a of the outer joint member 2, the processing tool 40 is further required to be pressed against the raised portion 20 to form the raised inclined surface 22, and hence a large load is required to be applied to the processing tool 40. For this reason, there is a problem in that a large press machine or the like is required, which results in increase in equipment cost. Further, there is also a problem in that the processing tool 40 is liable to be worn because a large load is applied to the processing tool 40.

In contrast, in the case of this embodiment, the inlet inclined surface 21 is formed in advance at the opening end 5b of the track groove 5. Thus, the raised inclined surface 22 can be formed without pressing the processing tool 40 against the raised portions 20, and caulking can be performed with a small pushing load. Accordingly, according to the processing method of this embodiment, a press machine or the like that applies a large load to the processing tool 40 becomes unnecessary. As a result, equipment cost can be reduced, and wear of the processing tool 40 can also be suppressed, thereby improving durability.

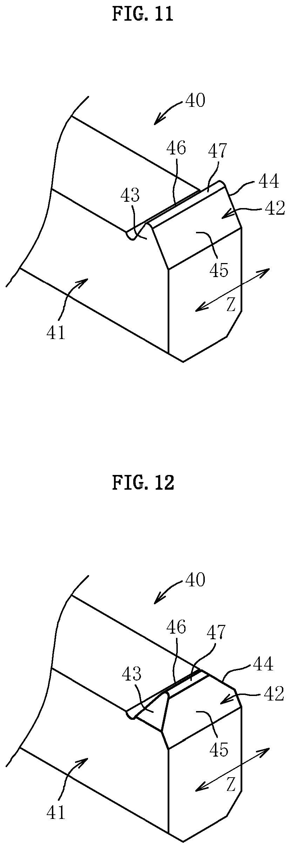

As the processing tool 40 for forming the raised portion 20, for example, the processing tool 40 as illustrated in FIG. 11 can be used.

The processing tool 40 illustrated in FIG. 11 comprises a main body portion 41 having a rectangular parallelepiped or cubic shape, and the raised portion forming portion 42 having a triangular convex shape formed on the main body portion 41. Here, when a direction indicated by an arrow Z illustrated in FIG. 11 is a width direction of the processing tool 40, the raised portion forming portion 42 comprises a pair of side surfaces 43 and 44 having a triangular shape provided at positions apart from each other in the width direction Z, and a front surface 45 and a rear surface 46 having a quadrangular shape (rectangular shape) provided between the side surfaces 43 and 44. A ridge line portion connecting the front surface 45 and the rear surface 46 to each other forms a distal end 47 of the raised portion forming portion 42.

When the raised portion 20 is to be formed using the processing tool 40 formed as described above, the distal end 47 of the raised portion forming portion 42 is pressed against the opening end surface 2a of the outer joint member 2. Then, the raised portion forming portion 42 is pushed into the opening end surface 2a so that the shape of the raised portion forming portion 42 is transferred onto the opening end surface 2a to form the recess 30, and the raised portion 20 is formed on the track groove 5 along with formation of the recess 30.

However, when the pair of side surfaces 43 and 44 of the raised portion forming portion 42 are arranged in parallel to each other as in the example illustrated in FIG. 11, a load applied at the time of pushing the raised portion forming portion 42 tends to be larger. Thus, as in the example illustrated in FIG. 12, the pair of side surfaces 43 and 44 may be inclined so as to approach each other toward the distal end 47. With use of such a processing tool 40, a load applied at the time of pushing the processing tool 40 into the opening end surface 2a of the outer joint member 2 can further be reduced, thereby improving durability of the processing tool 40.

The recess 30 formed using the processing tool 40 illustrated in FIG. 12 has the following shape.

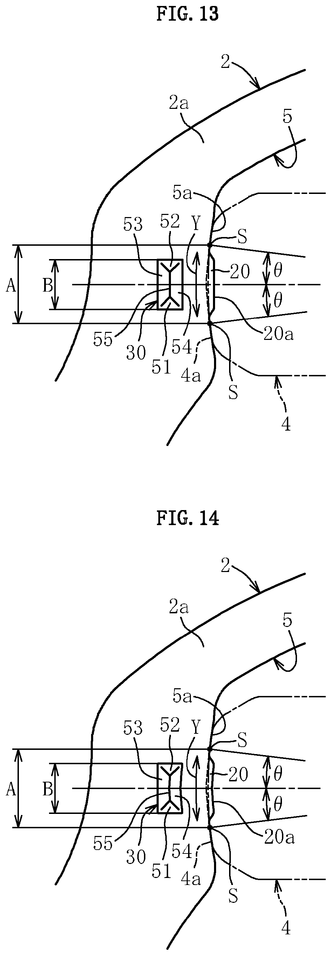

As illustrated in FIG. 13, as viewed from the axial direction (direction orthogonal to the drawing sheet), the recess 30 is formed into a shape having first and second inclined surfaces 51 and 52 having a triangular shape to which the pair of side surfaces 43 and 44 of the processing tool 40 are transferred, third and fourth inclined surfaces 53 and 54 having a quadrangular shape (trapezoidal shape) to which the front surface 45 and the rear surface 46 of the processing tool 40 are transferred, and a bottom portion 55 to which the distal end 47 of the processing tool 40 is transferred. The first inclined surface 51 and the second inclined surface 52 each having a triangular shape are provided at positions apart from each other in a direction Y along the track groove 5 as viewed from the axial direction, and are inclined so as to approach each other toward the bottom portion 55. On the other hand, the third inclined surface 53 and the fourth inclined surface 54 each having a quadrangular shape (trapezoidal shape) extend in the direction Y along the track groove 5, and are inclined so as to approach each other toward the bottom portion 55.

Further, it is not always required that the shape of the opening edge of the recess 30 be a rectangular shape or a square shape as illustrated in FIG. 13, and may be a shape having a curved line or a folding line at a part (in this case, the shape of the fourth inclined surface 54) as illustrated in FIG. 14. Accordingly, the shape of the raised portion 20 can be a concave shape recessed on the center side from the end portion side in the width direction Y along the track groove 5. In this case, the surface 20a of the raised portion 20 with which the roller 4 comes into contact is a surface having a concave shape close to the curvature of an outer peripheral surface 4a of the roller 4. Thus, the contact range of the roller 4 and the raised portion 20 increases, and the coming-off prevention force by the raised portion 20 is further improved.

Further, when the outer peripheral surface 4a of the roller 4 and the roller guide surface 5a of the track groove 5 are in contact with each other at a predetermined contact angle θ, that is, in a so-called angular contact as illustrated in FIG. 13 or FIG. 14, it is preferred that the raised portion 20 be formed within an interval between contact points S between the outer peripheral surface 4a of the roller 4 and the roller guide surface 5a. Here, in order to allow the raised portion 20 to be formed within the interval between the two contact points S, a width dimension B of the recess 30 in the direction Y along the track groove 5 is set smaller than an interval A between the two contact points S (B<A). As described above, the raised portion 20 is formed within the interval between the two contact points S. Thus, even when a contact mark or deformation occurs in the roller 4 due to contact between the roller 4 and the raised portion 20, the contact mark or the deformation does not occur in the contact portions (contact point S) between the roller guide surface 5a and the roller 4. Thus, functionality or durability of the roller 4 can satisfactory be maintained.

The embodiment of the present invention has been described above but the present invention should not be construed as being limited to the above-mentioned embodiment. Further, the present invention is not limited to a case of being applied to a plunging type constant velocity universal joint of a roller type comprising rollers as rolling elements as illustrated in FIG. 1 and FIG. 2. For example, the present invention can be applied to a plunging type constant velocity universal joint of a ball type comprising balls as rolling elements as illustrated in FIG. 19.

### Reference Signs List

- 1: tripod type constant velocity universal joint (plunging type constant velocity universal joint)
- 2: outer joint member
- 2a: opening end surface
- 3: tripod member (inner joint member)
- 4: roller (rolling element)
- 5: track groove
- 5a: roller guide surface
- 5b: opening end
- 20: raised portion
- 21: inlet inclined surface
- 22: raised inclined surface
- 51: first inclined surface
- 52: second inclined surface
- 55: bottom portion
- X: axial direction
- Y: direction along track groove
- α: inclination angle of inlet inclined surface

## Claims

1. An outer joint member (2) for a plunging type constant velocity universal joint (1), the outer joint member (2) comprising a track groove (5) configured to receive a rolling element (4) in an inner peripheral surface thereof, the outer joint member (2) being configured to transmit rotational torque while allowing angular displacement and axial displacement between the outer joint member (2) and an inner joint member (3) through intermediation of the rolling element (4), the outer joint member (2) comprising:
a raised portion (20) formed by caulking at an opening end side of the track groove (5) so as to prevent coming-off of internal components comprising the rolling element (4) and the inner joint member (3), wherein the raised portion (20) comprises a raised inclined surface (22) inclined so as to increase a raised amount from the opening end side to a joint far side; and
a recess (30) formed by caulking at an opening end surface (2a) corresponding to a portion at which the raised portion (20) is formed;
**characterized in that** the outer joint member (2) further comprises
an inlet inclined surface (21), which is inclined by 45° or more with respect to the opening end surface (2a), and is formed at the opening end (5b) of the track groove (5) adjacent to the raised portion (20).

2. The outer joint member (2) for a plunging type constant velocity universal joint (1) according to claim 1, wherein the inlet inclined surface (21) is inclined with respect to the opening end surface (2a) in a range of from 60° or more and 70° or less.

3. The outer joint member (2) for a plunging type constant velocity universal joint (1) according to claim 1 or 2, wherein the recess (30) comprises a pair of inclined surfaces (51, 52) provided at positions apart from each other in a direction (Y) along the track groove (5) and inclined so as to approach each other toward a bottom portion (55) of the recess (30) as viewed from an axial direction.

4. The outer joint member (2) for a plunging type constant velocity universal joint (1) according to any one of claims 1 to 3, wherein the raised portion (20) allows coming-off of the internal components when a pull-out force larger than a coming-off force that may be generated at the time of an operation for assembling a joint is applied to the internal components.

5. A plunging type constant velocity universal joint (1), comprising:
an outer joint member (2) having a track groove (5) formed in an inner peripheral surface thereof;
a rolling element (4) arranged in the track groove (5) so as to be rollable; and
an inner joint member (3) configured to transmit rotational torque while allowing angular displacement and axial displacement between the inner joint member (3) and the outer joint member (2) through intermediation of the rolling element (4),
wherein the plunging type constant velocity universal joint (1) comprises, as the outer joint member (2), the outer joint member (2) for a plunging type constant velocity universal joint (1) of any one of claims 1 to 4.

6. A coming-off prevention processing method of performing coming-off prevention processing for internal components comprising a rolling element (4) and an inner joint member (3) on an outer joint member (2) for a plunging type constant velocity universal joint (1), the outer joint member (2) comprising a track groove (5) configured to receive the rolling element (4) in an inner peripheral surface thereof, the outer joint member (2) being configured to transmit rotational torque while allowing angular displacement and axial displacement between the outer joint member (2) and the inner joint member (3) through intermediation of the rolling element (4), the method comprising:
forming an inlet inclined surface (21) inclined by 45° or more with respect to the opening end surface (2a) of the outer joint member (2) at an opening end (5b) of the track groove (5); and
by forming a recess (30) in the opening end surface (2a) by a caulking process, the opening end side of the track groove (5) comprising at least the inlet inclined surface (21) is raised to form a raised portion (20) for preventing the internal component from coming off.

## Patentansprüche

1. Äußeres Gelenkelement (2) für ein universelles Gleichlaufgelenk (1) vom Verschiebetyp, wobei das äußere Gelenkelement (2) eine Spurrille (5) aufweist, die so konfiguriert ist, dass sie einen Wälzkörper (4) in ihrer inneren Umfangsfläche aufnimmt, wobei das äußere Gelenkelement (2) so konfiguriert ist, dass es ein Drehmoment überträgt und gleichzeitig einen Winkelversatz und einen axialen Versatz zwischen dem äußeren Gelenkelement (2) und einem inneren Gelenkelement (3) durch Vermittlung des Wälzkörpers (4) zulässt, wobei das äußere Gelenkelement (2) umfasst:
einen erhöhten Abschnitt (20), der durch Verstemmen an einer Öffnungsendseite der Spurrille (5) gebildet ist, um ein Herausfallen von inneren Komponenten, die den Wälzkörper (4) und das innere Gelenkelement (3) umfassen, zu verhindern, wobei der erhöhte Abschnitt (20) eine erhöhte geneigte Fläche (22) umfasst, die so geneigt ist, dass sie einen erhöhten Betrag von der Öffnungsendseite zu einer Gelenkfernseite hin vergrößert; und
eine Aussparung (30), die durch Verstemmen an einer Öffnungsendfläche (2a) gebildet ist, die einem Abschnitt entspricht, an dem der erhöhte Abschnitt (20) gebildet ist;
**dadurch gekennzeichnet, dass** das äußere Gelenkelement (2) ferner umfasst:
eine Eingangsneigungsfläche (21), die in Bezug auf die Öffnungsendfläche (2a) um 45° oder mehr geneigt ist und an dem Öffnungsende (5b) der Spurrille (5) neben dem erhöhten Abschnitt (20) ausgebildet ist.

2. Das äußere Gelenkelement (2) für ein universelles Gleichlaufgelenk vom Verschiebetyp (1) nach Anspruch 1, wobei die Eingangsneigungsfläche (21) in Bezug auf die Öffnungsendfläche (2a) in einem Bereich von 60° oder mehr und 70° oder weniger geneigt ist.

3. Das äußere Gelenkelement (2) für ein universelles Gleichlaufgelenk vom Verschiebetyp (1) nach Anspruch 1 oder 2, wobei die Aussparung (30) ein Paar geneigter Flächen (51, 52) umfasst, die an voneinander beabstandeten Positionen in einer Richtung (Y) entlang der Spurrille (5) vorgesehen und so geneigt sind, dass sie sich, von einer axialen Richtung aus gesehen, in Richtung eines Bodenabschnitts (55) der Aussparung (30) annähern.

4. Das äußere Gelenkelement (2) für ein universelles Gleichlaufgelenk vom Verschiebetyp (1) nach Anspruch 1 bis 3, wobei der erhöhte Abschnitt (20) ein Herauslösen der inneren Komponenten ermöglicht, wenn eine Auszugskraft, die größer ist als eine Herauslösekraft, die zum Zeitpunkt eines Vorgangs zur Montage eines Gelenks erzeugt werden kann, auf die inneren Komponenten ausgeübt wird.

5. Universelles Gleichlaufgelenk vom Verschiebetyp (1), umfassend:
ein äußeres Gelenkelement (2) mit einer in seiner inneren Umfangsfläche ausgebildeten Spurrille (5);
einen Wälzkörper (4), der in der Spurrille (5) so angeordnet ist, dass er wälzbar ist; und
ein inneres Gelenkelement (3), das so konfiguriert ist, dass es ein Drehmoment überträgt und gleichzeitig einen Winkelversatz und einen axialen Versatz zwischen dem inneren Gelenkelement (3) und dem äußeren Gelenkelement (2) durch Vermittlung des Wälzkörpers (4) zulässt,
wobei das universelle Gleichlaufgelenk vom Verschiebetyp (1) als äußeres Gelenkelement (2) das äußere Gelenkelement (2) für ein universelles Gleichlaufgelenk (1) vom Verschiebetyp gemäß einem der Ansprüche 1 bis 4 umfasst.

6. Verfahren zur Verhinderung eines Herauslösens zum Durchführen einer Verarbeitung zur Verhinderung eines Herauslösens für innere Komponenten, die einen Wälzkörper (4) und ein inneres Gelenkelement (3) umfassen, an einem äußeren Gelenkelement (2) für ein universelles Gleichlaufgelenk vom Verschiebetyp (1), wobei das äußere Gelenkelement (2) eine Spurrille (5) aufweist, die so konfiguriert ist, dass sie den Wälzkörper (4) in ihrer inneren Umfangsfläche aufnimmt, wobei das äußere Gelenkelement (2) so konfiguriert ist, dass es ein Drehmoment überträgt und gleichzeitig einen Winkelversatz und einen axialen Versatz zwischen dem äußeren Gelenkelement (2) und dem inneren Gelenkelement (3) durch Vermittlung des Wälzkörpers (4) zulässt, wobei das Verfahren umfasst:
Ausbilden einer Eingangsneigungsfläche (21), die um 45° oder mehr in Bezug auf die Öffnungsendfläche (2a) des äußeren Gelenkelements (2) an einem Öffnungsende (5b) der Spurrille (5) geneigt ist; und
durch Ausbilden einer Aussparung (30) in der Öffnungsendfläche (2a) durch einen Verstemmvorgang wird die Öffnungsendseite der Spurrille (5), die mindestens die Eingangsneigungsfläche (21) umfasst, angehoben, um einen erhöhten Abschnitt (20) zu bilden, der verhindert, dass sich die interne Komponente herauslöst.

## Revendications

1. Organe de joint extérieur (2) pour un joint universel homocinétique de type plongeant (1), l'organe de joint extérieur (2) comprenant une rainure de guidage (5) configurée pour recevoir un élément roulant (4) dans sa surface périphérique intérieure, l'organe de joint extérieur (2) étant configuré pour transmettre un couple de rotation tout en permettant un déplacement angulaire et un déplacement axial entre l'organe de joint extérieur (2) et un organe de joint intérieur (3) par l'intermédiaire de l'élément roulant (4), l'organe de joint extérieur (2) comprenant :
une partie surélevée (20) formée par calfeutrage au niveau d'un côté d'extrémité d'ouverture de la rainure de guidage (5) de manière à empêcher un détachement de composants internes comprenant l'élément roulant (4) et l'organe de joint intérieur (3), dans lequel la partie surélevée (20) comprend une surface inclinée surélevée (22) inclinée de manière à augmenter une quantité surélevée depuis le côté d'extrémité d'ouverture jusqu'à un côté éloigné du joint ; et
un renfoncement (30) formé par calfeutrage au niveau d'une surface d'extrémité d'ouverture (2a) correspondant à une partie au niveau de laquelle la partie surélevée (20) est formée ;
**caractérisé en ce que** l'organe de joint extérieur (2) comprend en outre une surface d'entrée inclinée (21), qui est inclinée de 45° ou plus par rapport à la surface d'extrémité d'ouverture (2a), et qui est formée au niveau de l'extrémité d'ouverture (5b) de la rainure de piste (5) adjacente à la partie surélevée (20).

2. Organe de joint extérieur (2) pour un joint universel homocinétique de type plongeant (1) selon la revendication 1, dans lequel la surface d'entrée inclinée (21) est inclinée par rapport à la surface d'extrémité d'ouverture (2a) dans une plage de 60° ou plus et 70° ou moins.

3. Organe de joint extérieur (2) pour un joint universel homocinétique de type plongeant (1) selon la revendication 1 ou 2, dans lequel le renfoncement (30) comprend une paire de surfaces inclinées (51, 52) disposées à des positions éloignées l'une de l'autre dans une direction (Y) le long de la rainure de guidage (5) et inclinées de manière à se rapprocher l'une de l'autre vers une partie de fond (55) du renfoncement (30) comme observé depuis une direction axiale.

4. Organe de joint extérieur (2) pour un joint universel homocinétique de type plongeant (1) selon l'une quelconque des revendications 1 à 3, dans lequel la partie surélevée (20) permet le détachement des composants internes lorsqu'une force d'arrachement plus importante qu'une force de détachement pouvant être générée lors d'une opération d'assemblage d'un joint est appliquée aux composants internes.

5. Joint universel homocinétique de type plongeant (1), comprenant :
un organe de joint extérieur (2) avec une rainure de guidage (5) formée dans sa surface périphérique intérieure ;
un élément roulant (4) disposé dans la rainure de guidage (5) de manière à pouvoir rouler ; et
un organe de joint intérieur (3) configuré pour transmettre un couple de rotation tout en permettant un déplacement angulaire et un déplacement axial entre l'organe de joint intérieur (3) et l'organe de joint extérieur (2) par l'intermédiaire de l'élément roulant (4),
dans lequel le joint universel homocinétique de type plongeant (1) comprend, en tant qu'organe de joint extérieur (2), l'organe de joint extérieur (2) pour un joint universel homocinétique de type plongeant (1) selon l'une quelconque des revendications 1 à 4.

6. Procédé de traitement de prévention de détachement consistant à effectuer un traitement de prévention de détachement pour des composants internes comprenant un élément roulant (4) et un organe de joint intérieur (3) sur un organe de joint extérieur (2) pour un joint universel homocinétique de type plongeant (1), l'organe de joint extérieur (2) comprenant une rainure de guidage (5) configurée pour recevoir l'élément roulant (4) dans sa surface périphérique intérieure, l'organe de joint extérieur (2) étant configuré pour transmettre un couple de rotation tout en permettant un déplacement angulaire et un déplacement axial entre l'organe de joint extérieur (2) et l'organe de joint intérieur (3) par l'intermédiaire de l'élément roulant (4), le procédé comprenant :
la formation d'une surface d'entrée inclinée (21) inclinée de 45° ou plus par rapport à la surface d'extrémité d'ouverture (2a) de l'organe de joint extérieur (2) au niveau d'une extrémité d'ouverture (5b) de la rainure de guidage (5) ; et
en formant un renfoncement (30) dans la surface d'extrémité d'ouverture (2a) par un processus de calfeutrage, le côté d'extrémité d'ouverture de la rainure de guidage (5) comprenant au moins la surface d'entrée inclinée (21) est surélevé pour former une partie surélevée (20) pour empêcher le détachement du composant interne.'
